# EUROPÄISCHE PATENTANMELDUNG

(11) **EP 2 944 423 A1**
(43) Veröffentlichungstag der Anmeldung: **18.11.2015**
(21) Anmeldenummer: 15167176.5
(22) Anmeldetag: 11.05.2015
(51) Int. Cl.: B24B 23/02, B25F 5/00, B24B 55/00, H02K 9/26

(54) **FILTERAUFSATZ ZUM ANBRINGEN AN EINEM WINKELSCHLEIFGERÄT**

(30) Priorität: 13.05.2014 DE 102014106693
(71) Anmelder: Metabowerke GmbH, 72622 Nürtingen (DE)
(72) Erfinder: Hiller, Matthias, 72657 Altenriet (DE)
(74) Vertreter: Markfort, Iris-Anne Lucie

(57) **Zusammenfassung**

Die Erfindung betrifft einen Filteraufsatz (20) zum Anbringen an einem Winkelschleifgerät (10) mit einem Gehäuse (12), das Lufteintrittsöffnungen (16) aufweist, umfassend ein Filtermittel (30), das im montierten Zustand eine vorsprungsfreie Außenfläche (22) des Winkelschleifgeräts (10) im Bereich der Lufteintrittsöffnungen (16) bildet.

## Beschreibung

Die vorliegende Erfindung betrifft einen Filteraufsatz zum Anbringen an einem Winkelschleifgerät sowie ein entsprechendes Winkelschleifgerät mit Filteraufsatz.

Elektrohandwerkzeuggeräte aller Art, insbesondere Winkelschleifgeräte, benötigen in der Regel eine Luftkühlung der elektromotorischen Antriebskomponenten, die in dem Gehäuse des Elektrohandwerkzeuggeräts aufgenommen sind. Dementsprechend sind im Bereich des elektromotorischen Antriebs an dem Gehäuse Lüftungsöffnungen bzw. Lufteintrittsöffnungen vorgesehen, durch welche Kühlluft von außen in das Gehäuse eingesogen werden kann. Insbesondere bei Elektrohandwerkzeuggeräten, wie Winkelschleifgeräten, die für die Metallbearbeitung eingesetzt werden, insbesondere für die spanende oder schleifende Metallbearbeitung, tritt dabei das Problem auf, dass mit der eingesaugten Kühlluft auch magnetisierbare Schmutz- und Staubpartikel in das Gehäuseinnere eingesogen werden, welche zu unerwünschter Abrasion und einem Anlagern an den magnetischen Komponenten des Elektromotors führen können. Hieraus können sich erhebliche Schäden der Antriebskomponenten und somit auch des Elektrohandwerkzeuggeräts ergeben.

Aus dem Stand der Technik ist es daher bekannt, Filtermittel im Bereich der Lufteintrittsöffnungen anzubringen, mittels derer insbesondere magnetisierbarer Staub von den elektromotorischen Antriebskomponenten ferngehalten werden kann. Eine entsprechende Lösung findet sich beispielsweise in der deutschen Offenlegungsschrift DE 10 2008 009 277 A1 oder der Patentschrift DE 10 30 443 B.

Nachteilig bei der dort gezeigten Lösung kann jedoch für einen Anwender sein, dass er zum Reinigen des Filtermittels dieses zusammen mit dem Filteraufsatz von der Maschine lösen muss.

Der vorliegenden Erfindung liegt daher die Aufgabe zugrunde, die bekannte Lösung weiter zu verbessern und eine einfache und schnelle Reinigung des Filtermittels zu ermöglichen.

Diese Aufgabe wird erfindungsgemäß durch einen Filteraufsatz mit den Merkmalen des Anspruchs 1 gelöst. Demgemäß umfasst der Filteraufsatz ein Filtermittel, das im montierten Zustand eine vorsprungsfreie Außenfläche des Winkelschleifgeräts im Bereich der Lufteintrittsöffnungen bildet.

Im Unterschied zu dem Stand der Technik ist also das Filtermittel nicht zwischen einer Struktur des Filteraufsatzes und dem Gehäuse des Winkelschleifgeräts angebracht, sondern bildet selbst eine Außenfläche des Winkelschleifgeräts. Dadurch, dass diese zusätzlich vorsprungsfrei, das heißt ohne Einkerbungen, Einbuchtungen oder dergleichen, ausgebildet ist, kann das Filtermittel durch einfaches Darüberwischen mit einem Stück Stoff, einem Handschuh oder dergleichen ohne weiteres, insbesondere ohne zusätzliche Schritte, gereinigt werden. Im Bereich des Filtermittels wird somit eine nahezu ausbuchtungsfreie Fläche gebildet, die allenfalls leicht gekrümmt, gebogen oder dergleichen sein kann. Somit bildet das Filtergewebe bzw. Filtermittel selbst einen zusammenhängenden Vorsprung.

Eine entsprechend einfache Reinigung ist bei den aus dem Stand der Technik bekannten Lösungen mangels eines eine vorsprungsfreie Außenoberfläche bildendes Filtermittels indes nicht möglich. So ist bei der Lösung der DE 10 2008 009 277 A1 das Filterpapier gegenüber der halbschalenförmigen Filterstruktur in Strömungsrichtung versetzt angeordnet. Somit wird die Außenoberfläche nicht nur durch das Filterpapier sondern bereichsweise auch durch die Filterstruktur gebildet. Letztere bildet somit im Bereich der das Filterpapier freigebenden Öffnungen Nischen aus, in denen sich Staub ablagern kann. Dieser kann nicht durch einfaches Abwischen wieder entfernt werden, sondern verbleibt in den Nischen und verstopft Teile der Filterfläche. Gleiches gilt für die in der DE 10 30 443 B gezeigten Lösung, in der das Filtermaterial gegenüber dem Stahlblechmantel in Luftströmungsrichtung ebenfalls versetzt angeordnet ist. Auch hier sind Staubablagerungen an dem Stahlblechmantel die Folge, die nicht ohne weiteres beseitigt werden können und die aktive Filterfläche nachteilig beeinflussen.

Die Struktur des Filteraufsatzes bildet somit bei den Lösungen des Stands der Technik Vorsprünge gegenüber dem Filtermaterial aus, die eine unmittelbare Zugänglichkeit des Filters behindern und somit die Reinigung des Filters nennenswert erschweren.

Erst dadurch, dass bei der erfindungsgemäßen Lösung das Filtermittel selbst die Außenoberfläche bildet und keinerlei Vorsprünge, beispielsweise gebildet durch Streben oder Rahmenteile des Filteraufsatzes, aufweist, wird eine vorteilhafte schnelle und unkomplizierte Reinigung ermöglicht.

Das Filtermittel und der Filteraufsatz können ferner integral miteinander ausgebildet sein. So ist es beispielsweise denkbar, dass der Filteraufsatz in der Art eines Rahmens das Filtermittel aufspannt, das an dem Filteraufsatz aufgeklebt oder angespritzt ist.

Der Filteraufsatz kann ferner Befestigungsmittel zur lösbaren Befestigung an dem Winkelschleifergehäuse umfassen. Beispielsweise können dies Rastvorsprünge oder dergleichen sein, mittels derer der Filteraufsatz an dem Gehäuse des Winkelschleifers aufgeklipst wird. Alternativ ist es jedoch ebenfalls denkbar, den Filteraufsatz zusammen mit dem Filtermittel an dem Winkelschleifergehäuse anzuschrauben.

Das Filtermittel kann eine netzförmige Struktur mit einer Maschenweite von beispielsweise 0,1 bis 0,2 mm und einen Mesh Count von 50 bis 150 Drähten, bevorzugt von etwa 100 Drähten pro Inch aufweisen. Insbesondere kann das Filtermittel aus Edelstahl hergestellt sein, da dieses Material eine besonders gute Verarbeitung und gleichzeitig eine sichere Filterstruktur bereitstellt. Ein aus Edelstahl hergestelltes Filtermittel kann insbesondere eine ausreichende Steifigkeit aufweisen, die das Vorsehen weiterer versteifender Strukturen an dem Filteraufsatz überflüssig macht.

Neben dem Filteraufsatz schlägt die vorliegende Erfindung auch ein Winkelschleifgerät mit den Merkmalen des Anspruchs 6 vor. Demgemäß umfasst das Winkelschleifgerät ein Gehäuse zur Aufnahme von elektromotorischen Antriebskomponenten, wobei das Gehäuse Lufteintrittsöffnungen zum Eintritt von die elektromotorischen Antriebskomponenten kühlender Außenluft aufweist, und einen Filteraufsatz mit den vorstehend beschriebenen Merkmalen.

Der Filteraufsatz kann dabei von außen auf das Gehäuse aufsetzbar sein. Dies ermöglicht insbesondere eine Nachrüstbarkeit auch bei bereits bekannten Winkelschleifgeräten.

Weiterhin kann der Filteraufsatz insbesondere auf das Gehäuse des Winkelschleifgeräts aufklipsbar sein und in einer Hintergriffstellung einrastbar sein. Ein solcher Aufklipsvorgang kann besonders einfach durchgeführt werden, indem der Filteraufsatz beispielsweise manuell in Richtung auf seine bestimmungsgemäße Position gedrückt wird. Der Filteraufsatz gleitet dann entsprechend der Kontur des Gehäusekörpers über den entsprechenden Gehäuseabschnitt mit den Lufteintrittsöffnungen, wobei er sich beispielsweise etwas weitet und dann in eine stabile Position schnappt. Zum Lösen oder Öffnen des Filteraufsatzes kann ein Anwender den Filteraufsatz in die entgegengesetzte Richtung unter geringfügiger elastischer Aufweitung des Filteraufsatzes wieder abstreifen. Hierzu kann der Filteraufsatz zumindest teilweise elastisch ausgebildet sein.

Weiterhin kann das Filtermittel eine im Wesentlichen vorsprungsfreie Außenfläche des Winkelschleifgeräts im Bereich der Lufteintrittsöffnungen bilden, die über die gesamte Fläche des Filtermittels aktiv zum Filtern der Kühlluft benutzt werden kann. Dadurch, dass der Filteraufsatz weder eine versteifende Struktur unterhalb des Filtermittels bereitstellen, noch dieses in montierter Stellung übergreifen muss, dient die gesamte Fläche des Filtermittels aktiv zum Filtern der Kühlluft, wodurch ein besonders effizientes Filtermittel bereitgestellt werden kann.

Weitere Vorteile und Details der vorliegenden Erfindung werden aus der nachfolgenden Beschreibung einer bevorzugten Ausführungsform deutlich, die im Zusammenhang mit den beigefügten Figuren näher beschrieben ist. Dabei zeigen die Figuren nur ein denkbares Ausführungsbeispiel, bei dem mehrere Merkmale der Erfindung in Kombination miteinander dargestellt sind. Der Fachmann wird diese jedoch auch losgelöst voneinander betrachten und gegebenenfalls zu weiteren geeigneten Kombinationen oder Unterkombinationen zusammenfügen können, ohne erfinderisch tätig werden zu müssen.

Die Figuren zeigen schematisch:
- Figur 1: eine Teilansicht eines Elektrohandwerkzeuggeräts mit einem erfindungsgemäßen Filteraufsatz in isometrischer Darstellung;
- Figur 2: eine Teilansicht des Elektrohandwerkzeuggeräts gemäß Figur 1, wobei der Filteraufsatz von dem Gehäuse des Elektrohandwerkzeuggeräts gelöst ist;
- Figur 3: die Anordnung gemäß Figur 2 in einer gedrehten Darstellung;
- Figur 4: den erfindungsgemäßen Filteraufsatz der Figuren 1 bis 3 in einer Seitenansicht;
- Figur 5: eine Draufsicht auf den erfindungsgemäßen Filteraufsatz der Figur 4 gemäß der Pfeilrichtung V; und
- Figur 6: eine Schnittansicht des erfindungsgemäßen Filteraufsatzes gemäß der Linie A-A der Figur 5.

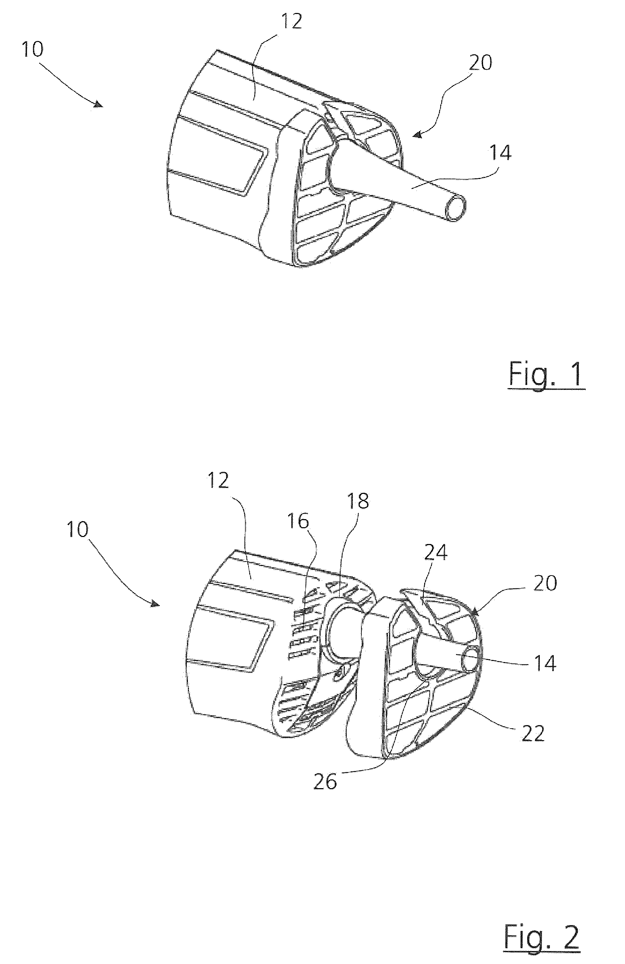

Die Figuren 1 bis 3 zeigen einen Abschnitt eines Elektrohandwerkzeuggeräts, auf dem ein erfindungsgemäßer Filteraufsatz angebracht ist. Bei dem Elektrohandwerkzeuggerät handelt es sich insbesondere um ein Winkelschleifgerät, wobei nur das von dem Werkzeug abgewandte Ende des Winkelschleifgeräts gezeigt ist. Dieses ist allgemein mit dem Bezugszeichen 10 bezeichnet und umfasst ein Gehäuse 12, aus dessen Inneren eine elektrische Leitung 14 herausführt. An seinem freien Ende 18 sind an dem Gehäuse 12 ferner Lüftungsschlitze bzw. Lufteintrittsöffnungen 16 vorgesehen, über die Kühlluft in das Innere des Gehäuses 12 zur Luftkühlung der darin aufgenommenen Antriebskomponenten (nicht gezeigt) genutzt werden kann.

Auf das freie Ende 18 des Gehäuses 12 kann im Bereich der Lufteintrittsöffnungen 16 erfindungsgemäß ein Filteraufsatz 20 aufgesetzt werden. Dieser ist in der gezeigten Ausführungsform auf den Gehäusekörper 12 aufklipsbar gestaltet. Der Filteraufsatz 20 umfasst einen schalenförmigen Kunststoffkörper, der durch Seitenwangen 28 begrenzt ist und der an einer Außenfläche 22 versteifende Stege 32 aufweist. Der Kunststoffkörper des Filteraufsatzes 20 umfasst ferner eine schlitzförmige Aussparung 24, die in einer kreisförmigen Ausnehmung 26 mündet. Durch letztere erstreckt sich im montierten Zustand die elektrische Leitung 14 des Elektrohandwerkzeuggeräts 10.

Die Außenfläche 22 wird ferner durch ein netzförmiges Filtermittel gebildet, das im montierten Zustand der dargestellten Ausführungsform bündig mit den Stegen 32 abschließt und dadurch zusammen mit dem Kunststoffkörper des Filteraufsatzes eine im wesentlichen vorsprungsfreie Außenfläche 22 des Winkelschleifgeräts 10 im Bereich der Lufteintrittsöffnungen 16 definiert. Aufgrund dieser spezifischen Ausbildung des Filteraufsatzes 20 ist es möglich, beispielsweise mit einem Arbeitshandschuh einfach über die Außenfläche 22 des Filteraufsatzes 20 zu wischen, um diesen zu reinigen. Im Unterschied hierzu ist es bei aus dem Stand der Technik bekannten Filteraufsätzen indes nachteilig, dass insbesondere im Bereich von Vorsprüngen an der Außenfläche eines solchen Filteraufsatzes Schmutzablagerungen kaum oder nur mit großem Aufwand entfernt werden können. Somit wird bei dem erfindungsgemäßen Filteraufsatz verfügbare Filterfläche vollständig genutzt und inaktive bzw. verschmutzte Abschnitte des Filteraufsatzes können vermieden werden.

Das netzförmige Filtermittel 30 kann integral mit dem Filteraufsatz 20 ausgebildet sein. So ist es beispielsweise denkbar, dass der Filteraufsatz in der Art eines Rahmens das Filtermittel 30 zwischen den Stegen 32 aufspannt, wobei das Filtermittel 30 an dem Filteraufsatz aufgeklebt oder an diesen angespritzt sein kann. Alternativ kann das Filtermittel jedoch auf den Stegen aufliegen bzw. diese von außen abdecken.

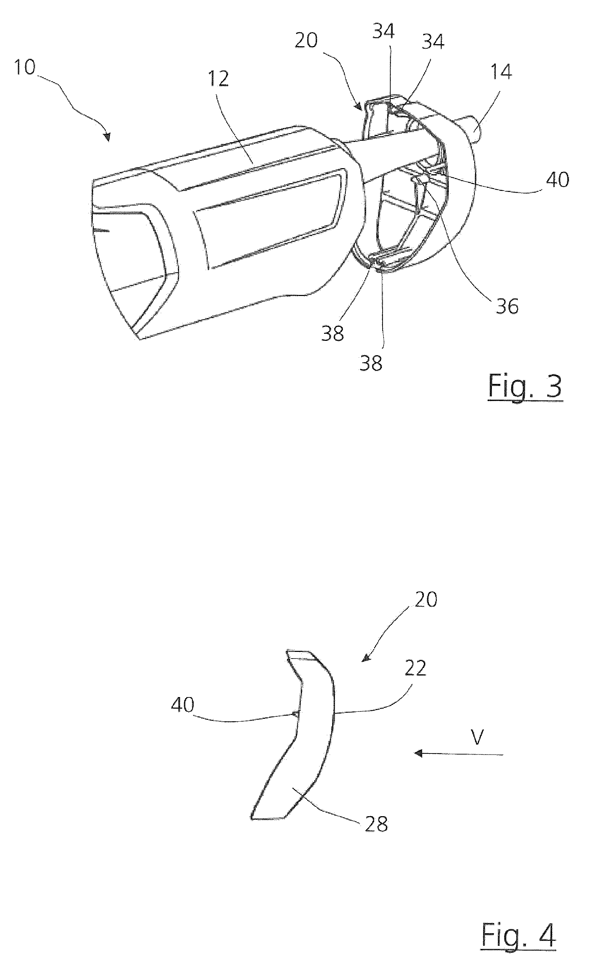

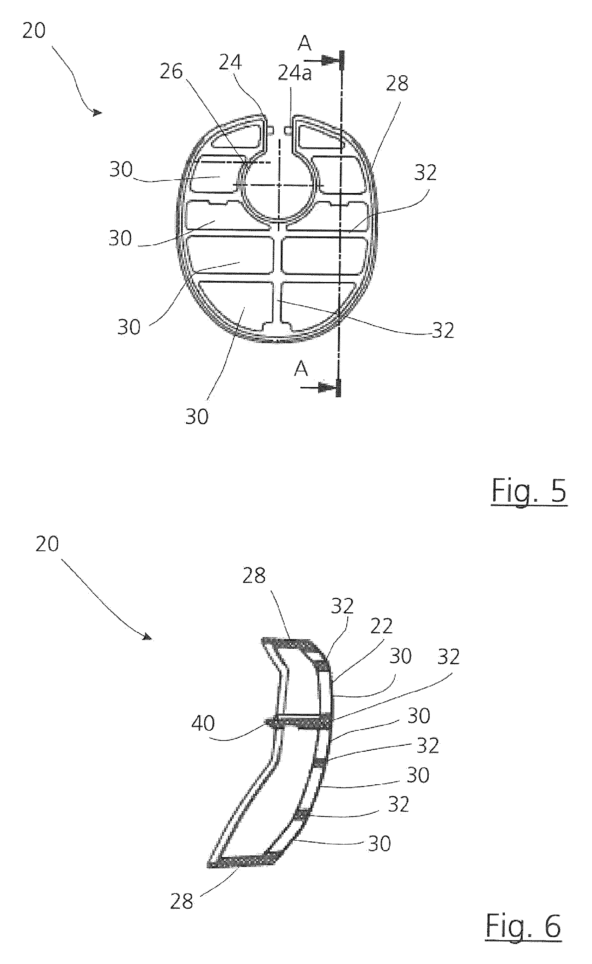

Wie insbesondere in den Figuren 3, 5 und 6 erkennbar ist, kann der Filteraufsatz 20 Befestigungsmittel zur lösbaren Befestigung an dem Winkelschleifergehäuse 12 umfassen. In dem dargestellten Ausführungsbeispiel sind Zentrierungen 34, 36 und 38 sowie Rastvorsprünge 40 vorgesehen, die in korrespondierende Ausnehmungen an dem freien Ende 18 des Winkelschleifergehäuses 12 eingerastet werden können, um den Filteraufsatz auf das Gehäuse 12 aufzuklipsen.

Nicht dargestellt ist zur Vereinfachung der Figuren die netzförmige Struktur des Filtermittels 30. Diese kann insbesondere eine Maschenweite von etwa 0,1- 0,2 mm und einen Mesh Count von 50 bis 150 Drähten pro Inch, bevorzugt von etwa 100 Drähten pro Inch aufweisen. Weiterhin kann das Filtermittel beispielsweise aus Edelstahl hergestellt sein, da dieses Material eine besonders gute Verarbeitung und gleichzeitig eine sicher Filterstruktur bereitstellt. Insbesondere könnte ein aus Edelstahl hergestelltes Filtermittel eine ausreichende Steifigkeit aufweisen, die einen Verzicht auf weitere versteifende Strukturen, beispielsweise in Form von Stegen 32 ermöglicht. Auf diese Weise könnte ein noch effizienterer Filteraufsatz bereitgestellt werden, bei dem die gesamte Filteroberfläche bzw. Außenfläche aktiv zum Filtern der Kühlluft genutzt werden kann.

## Patentansprüche

1. Filteraufsatz (20) zum Anbringen an einem Winkelschleifgerät (10) mit einem Gehäuse (12), das Lufteintrittsöffnungen (16) aufweist, umfassend ein Filtermittel (30), das im montierten Zustand eine vorsprungsfreie Außenfläche (22) des Winkelschleifgeräts (10) im Bereich der Lufteintrittsöffnungen (16) bildet.

2. Filteraufsatz (20) nach Anspruch 1,
wobei das Filtermittel (30) und der Filteraufsatz (20) integral miteinander ausgebildet sind.

3. Filteraufsatz (20) nach Anspruch 1 oder 2
wobei das Filtermittel (30) eine netzförmige Struktur mit einer Maschenweite von etwa 0,1 bis 0,2 mm aufweist.

4. Filteraufsatz (20) nach einem der Ansprüche 1 bis 3
wobei der Filteraufsatz (20) Befestigungsmittel (40) zur lösbaren Befestigung an dem Winkelschleifergehäuse (12) umfasst.

5. Filteraufsatz (20) nach einem der Ansprüche 1 bis 3
wobei das Filtermittel (30) aus Edelstahl hergestellt ist.

6. Winkelschleifgerät (10) umfassend ein Gehäuse (12) zur Aufnahme von elektromotorischen Antriebskomponenten, wobei das Gehäuse (12) Lufteintrittsöffnungen (16) zum Eintritt von die elektromotorischen Antriebskomponenten kühlender Außenluft aufweist, und einen Filteraufsatz (20) mit den Merkmalen der vorhergehenden Ansprüche.

7. Winkelschleifgerät (10) nach Anspruch 6,
wobei der Filteraufsatz (20) von außen auf das Gehäuse (12) aufsetzbar ist.

8. Winkelschleifgerät (10) nach Anspruch 6 oder 7,
wobei der Filteraufsatz (20) lösbar an dem Gehäuse (12) befestigbar, insbesondere auf dieses aufklipsbar ist und in eine Hintergriffstellung einrastbar ist.

9. Winkelschleifgerät (10) nach einem der Ansprüche 6 bis8,
wobei das Filtermittel (30) eine vorsprungsfreie Außenfläche (22) des Winkelschleifgeräts (10) im Bereich der Lufteintrittsöffnungen (16) bildet, die über die gesamte Fläche des Filtermittels (30) aktiv zum Filtern der Kühlluft genutzt werden kann.

10. Winkelschleifgerät (10) nach einem der Ansprüche 6 bis 9,
wobei der Filteraufsatz (20) zumindest teilweise elastisch ausgebildet ist.
